Europäisches Patentamt

**European Patent Office**

**Office européen des brevets**

(11) Publication number: **0 161 890**
A2

# EUROPEAN PATENT APPLICATION

(21) Application number: **85303190.4**

(22) Date of filing: **03.05.85**

(51) Int. Cl.⁴: **B 62 B 3/10**

(30) Priority: **04.05.84 US 607128**

(43) Date of publication of application: **21.11.85**
**Bulletin 85/47**

(84) Designated Contracting States: **AT BE CH DE FR GB IT LI LU NL SE**

(71) Applicant: **Rehrig, B. Houston, 4539 Gorham Street, Corona Del Mar California 92625 (US)**

(72) Inventor: **Rehrig, B. Houston, 4539 Gorham Street, Corona Del Mar California 92625 (US)**

(74) Representative: **Frost, Dennis Thomas et al, WITHERS & ROGERS 4 Dyer's Buildings Holborn, London, EC1N 2JT (GB)**

(54) **Plastic wheeled cart chassis.**

(57) A plastic wheeled cart chassis for use with a bottom-supported plastic basket having a downwardly facing basket mounting portion. The chassis includes a molded longitudinally extending base, with front and rear wheels. A basket support is connected to the base which has coupling means for quickly and releasably coupling a basket to the chassis.

## PLASTIC WHEELED CART CHASSIS

### BACKGROUND OF THE INVENTION

The present invention relates generally to the field of wheeled carts such as to those used as grocery shopping carts in supermarkets and the like, and more particularly, is directed to a novel plastic wheeled cart chassis for use with a bottom-supported basket.

Ideally, carts of this type, and particularly those used in supermarkets and grocery stores, should have the following characteristics. First, they should be able to withstand a great deal of abuse, particularly to the basket portion. Carts are continuously impacted with one another and with stationary objects. Second, the carts should be easy to push and to maneuver. The condition of the cart wheels has a great effect on this characteristic, but so does the weight of the cart. Third, the carts should be of such design and such surface finish as not to have a propensity to collect dirt and contaminants. Fourth, the carts should be able to withstand cleaning by strong detergents or steam. Fifth, the carts usually must have sides of openwork construction, because customers wish to be able to observe the contents of the carts from any angle. Sixth, the carts should be attractive and should maintain their attractiveness over a long period of time.

For the most part, the carts present in the prior art comprise a tubular metal frame or chassis to which is attached a basket of open wire-work construction. The wires are in various crossing patterns, and they are usually welded together at the crossing points. Heavier wire reinforcement is used where necessary. Conventionally, the cart frame and the basket are integral with one another. That is, the basket wires and the frame components are welded together at appropriate points, or the wires are interlocked with the frame components. To promote cleanliness and attractiveness, the entire cart is chrome plated. Sometimes plastic or rubber bumpers are installed at strategic points, such as corners.

The prior art carts do not satisfy all of the requirements set forth above. Many of the deficiencies associated with such carts have to do with the basket portion. The wires in the basket are welded at the crossing points, and the basket is then chrome-plated, the latter to provide a smooth, cleanable, attractive surface. The welding process for such an item is intricate, as is the plating process. It is therefore not uncommon to have welds and plating of marginal quality so that, upon hard impact, or upon a series of impacts over a period of time, wire welds and the plating are broken. The plating is also subject to being removed by wear and by scraping against other objects. This allows the base metal to rust. Also, if the basket is used in an environment where corrosion of metals is a problem, such as in grocery stores, the base metal exposed at the broken welds will corrode. The cart, and particularly the basket, then becomes unsightly and unattractive. At those same exposed points, food particles can become entrapped in small cracks and crevices, even if the baskets are periodically cleaned, resulting in an unsanitary condition. In addition, articles placed in the basket can become pinched or snared by the unsecured wires and plating, causing inconvenience for the customer and inflicting damage to the goods. Impacts also frequently cause the basket to be deformed inwardly, giving rise to all of the above problems.

Repair of cart baskets is a problem in itself, because it is difficult to bend the wires back into shape, and it is difficult and expensive to reweld and replate them. The cart frame and the basket are often integral with one another in prior art carts, and therefore they cannot easily be taken apart to allow repair or replacement of components. To replace the basket, welds must be broken, then replaced. Or complicated bending and interlocking of wires is necessary during disassembly and assembly. Usually, the cart is simply not repaired. When it becomes too unsightly or too unsanitary to be used, it is discarded. The loss of the entire cart for the sake of the basket is certainly uneconomical.

The above described deficiencies associated with baskets of wire work construction were addressed in Applicant's U.S. Patent No. 3,999,774 and 4,273,346. These patents disclose a plastic basket for use on a metal frame and have resulted in carts that are far superior to those previously known in the art. While such carts represent a significant advancement in the art, they are not the ideal cart because of the use of a metal frame or chassis.

A metal frame suffers from many of the same problems and concerns described above with respect to baskets of wire construction. Thus, they are susceptible to broken welds and plating, have a propensity to collect dirt and contaminants and cannot be easily separated from the basket to make repairs or perform routine maintenance such as cleaning. Thus, as with baskets of wire construction, metal frames or chassis deteriorate rather quickly and must be discarded.

Carts having metal frames are also quite heavy, making them difficult to push and to maneuver, especially if they have some malfunction of the wheels.

SUMMARY OF THE INVENTION

It is the overall object of the present invention to provide a new plastic chassis for use with a basket which overcomes the disadvantages of prior art frames and chassis.

A specific object of the present invention is to provide a new plastic chassis which is not easily damaged by impact.

Another specific object of the present invention is to provide a new plastic chassis which is easy to clean.

Another specific object of the present invention is to provide a new plastic chassis which can be quickly and releasably mounted to a basket.

A further specific object of the present invention is to provide a new plastic chassis which is lighter in weight than chassis known in the prior art.

A still further specific object of the present invention is to provide a new plastic chassis which does not prevent basket nesting when a basket is mounted on the chassis.

Another specific object of the present invention is to provide a new plastic chassis which is less noisy than chassis known in the prior art.

Another specific object of the present invention is to provide a new plastic chassis which is more attractive than prior art chassis, and which maintains this attractiveness over a long period of time.

Another specific object of the present invention is to provide a new plastic chassis which can be quickly and releasably coupled to a basket.

The chassis in accordance with the present invention is made of plastic, such as polyethylene, which is strong, light-weight, has a smooth finish, and can deform somewhat to absorb impact and then return to its original shape. The chassis is molded as an integrally unit. Thus there are no seams to break, or cracks and crevices to collect dirt. The plastic does not rust or corrode under the influence of food acids and the like. The use of a plastic chassis has been found to substantially reduce the weight of an average cart. Rigidity is provided to the chassis by the use of suitable integral strengthening ribs, beams and struts. The arrangement of the ribs, beams and struts enable the chassis of the present invention to carry a very large load without buckling under stress.

One of the key features of this invention is the fact that the chassis can be replaced, if necessary, and further, that it can be replaced quite easily. The top portion of the chassis includes coupling means for quickly and releasably coupling the chassis to a basket having corresponding coupling means. The coupling means includes male locking elements which cooperate with corresponding female locking elements on the basket. Therefore, the basket may be quickly coupled to the chassis. Thus, damage to the basket does not require that the chassis be discarded and damage to the chassis does not require that the basket be discarded. A damaged basket may be quickly removed and a new basket installed on the cart chassis and a damaged chassis may likewise be removed and a new one installed.

Another advantage is that the plastic chassis can be made in a variety of bright colors. This makes the cart more attractive. It also makes the cart more visible, which reduces accidents both inside the store and outside on the parking lot.

The noise produced by movement of carts which have the chassis of the invention or, by impacting it with other carts or other objects, is considerably less than with carts having chassis known in the prior art.

BRIEF DESCRIPTION OF THE DRAWINGS

Fig. 1 is a side elevational view of the plastic chassis in accordance with the present chassis.

Fig. 2 is a top plan view of the chassis.

Fig. 3 is a front elevational view of the chassis.

Fig. 4 is a sectional view taken along the line 4-4 of Fig. 3.

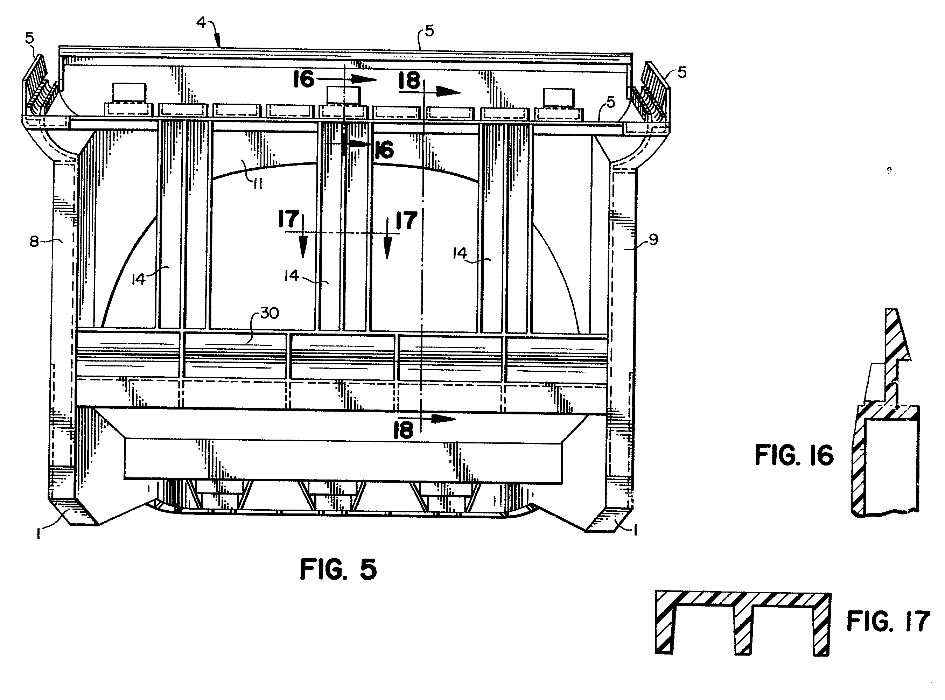

Fig. 5 is a rear elevational view of the chassis.

Fig. 6-10 are sectional views taken along corresponding section lines of Fig. 1.

Fig. 11 & 12 are sectional views taken along corresponding section lines of Fig. 2.

Fig. 13 is an end elevational view of the reinforcing metal insert for the front transverse strut of the chassis.

Fig. 14 is a sectional view taken along lines 14-14 of Fig. 13.

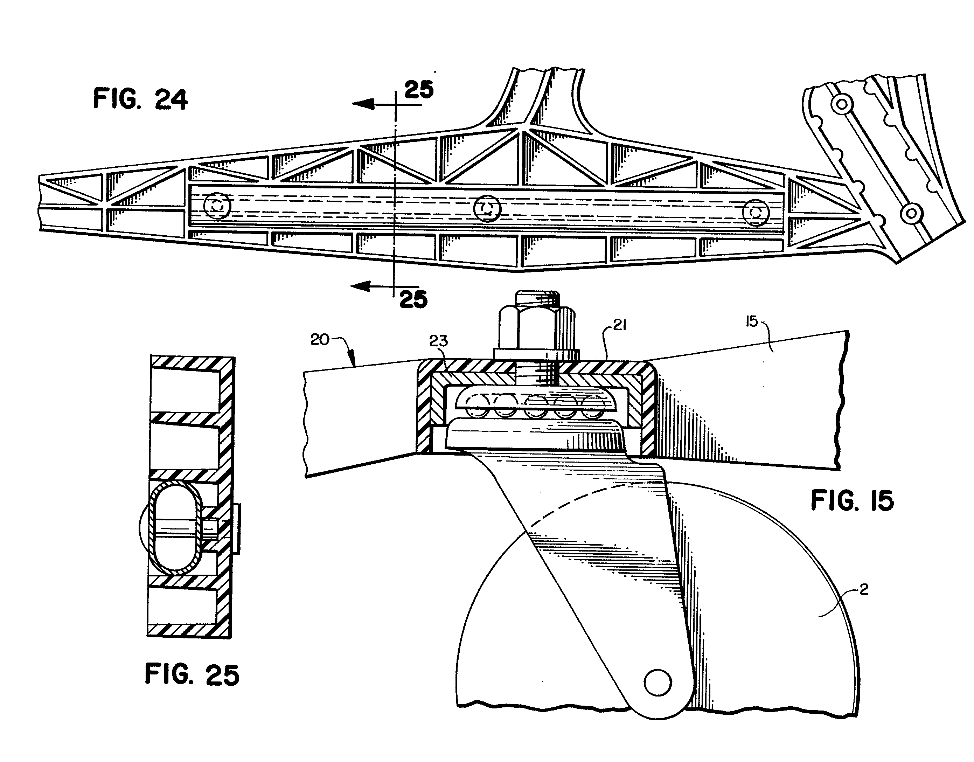

Fig. 15 is a sectional view taken along line 15-15 of Fig. 2, but with a front wheel assembly added.

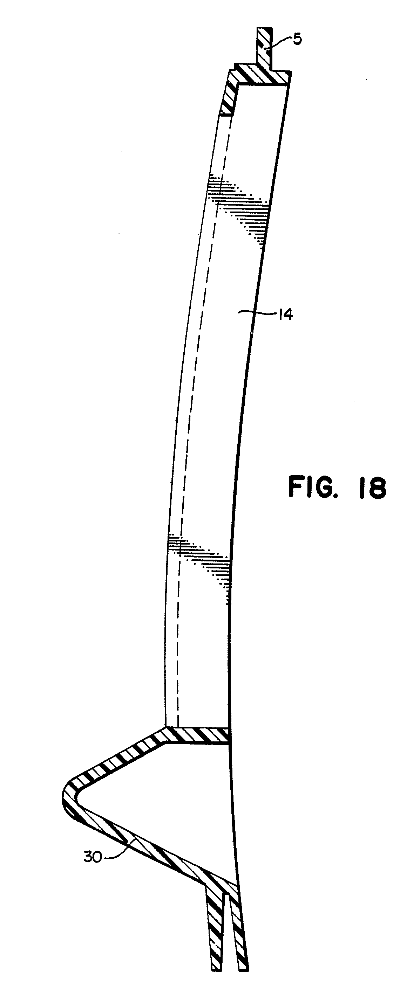

Figs. 16-18 are sectional views taken along corresponding section lines of Fig. 5.

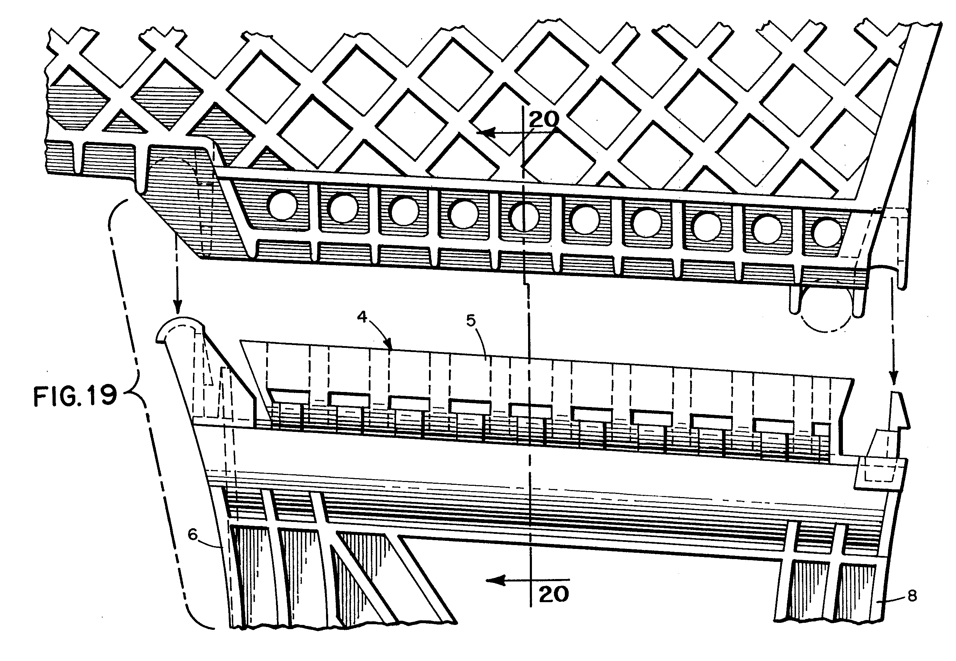

Fig. 19 is an exploded side elevational view of a basket and the chassis of the invention prior to interlocking them.

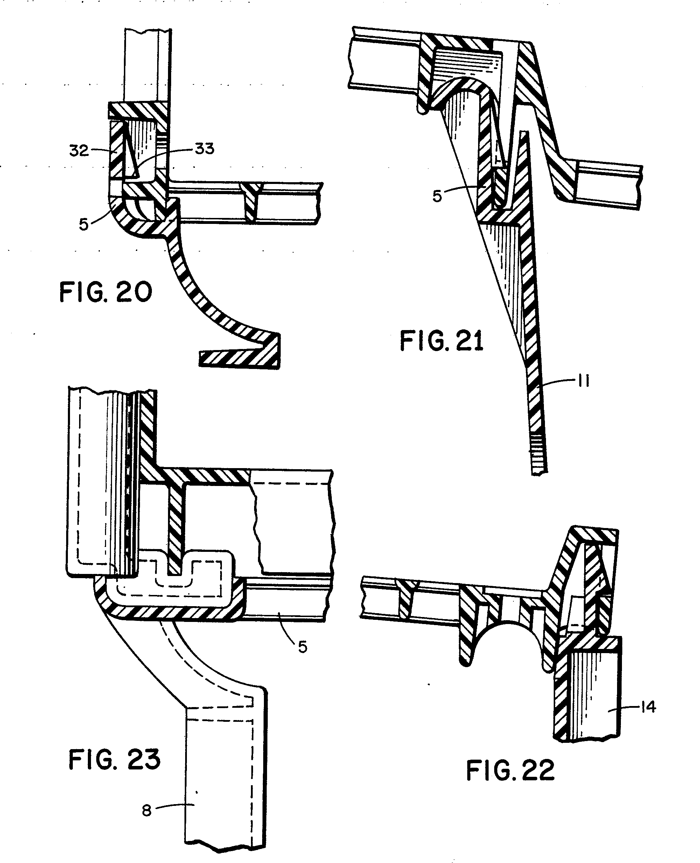

Fig. 20 is a sectional view taken along line 20-20 of Fig. 19, after assembly of a basket on the chassis of the invention.

Fig. 21 is a sectional view showing the interlocking of the chassis and the bottom of the basket.

Fig. 22 is a sectional view showing the interlocking elements at the rear of the assembly.

Fig. 23 is a rear elevational view of the assembly showing how the lower end of the handle is clamped between the chassis and the basket.

Fig. 24 is a side elevational view of a modified form of the chassis.

Fig. 25 is a sectional view taken along line 25-25 of Fig. 24.

The chassis in accordance with the present invention is comprised of a number of interrelated elements. Each of which will be a explained in detail below. The chassis is advantegously manufactured of a plastic material such as polyethylene. The properties of polyethylene are ideally suited to this application, for polyethylene is relatively strong, but is flexible enough to absorb some deformation, such as caused by impact, without breaking. However, other materials having similar properties can also be used.

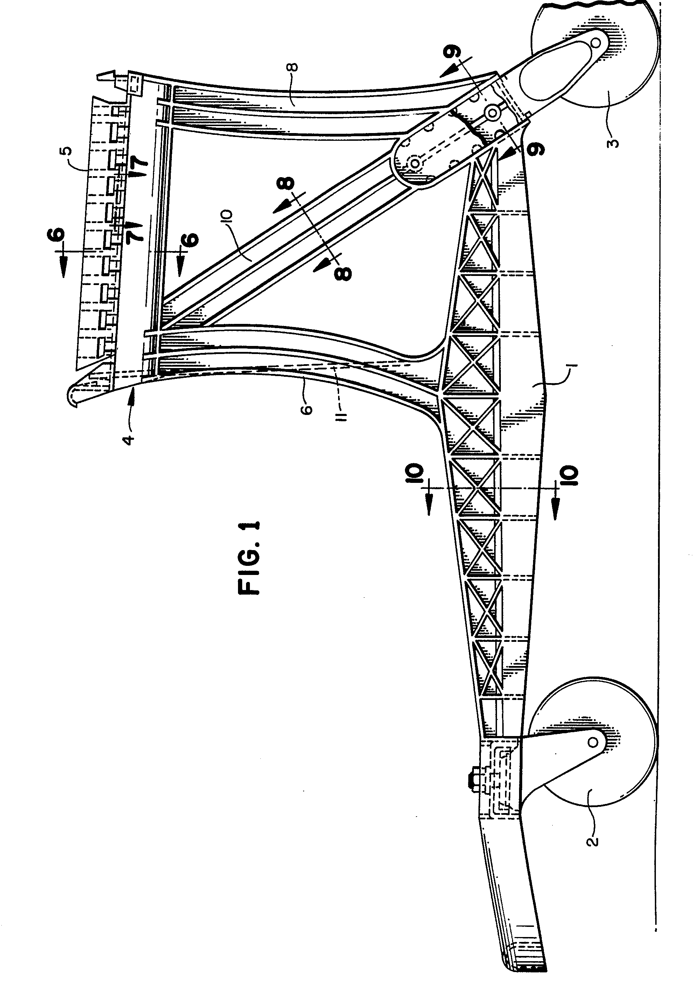

With reference to Figure 1, the chassis in accordance with the present invention comprises a longitudinally extending base 1 with front wheel assemblies 2 and rear wheel assemblies 3. An upstanding molded basket support 4 is supported by base 1. Basket support 4 has an upwardly facing mounting portion 5 which is adapted to mate with a corresponding basket mounting portion; such as the mounting portion of the basket disclosed in applicant's U.S. Patent Application Serial No. 607129 (Applicant's Attorney's docket No. 13833). All of these elements are integrally molded as a single unit.

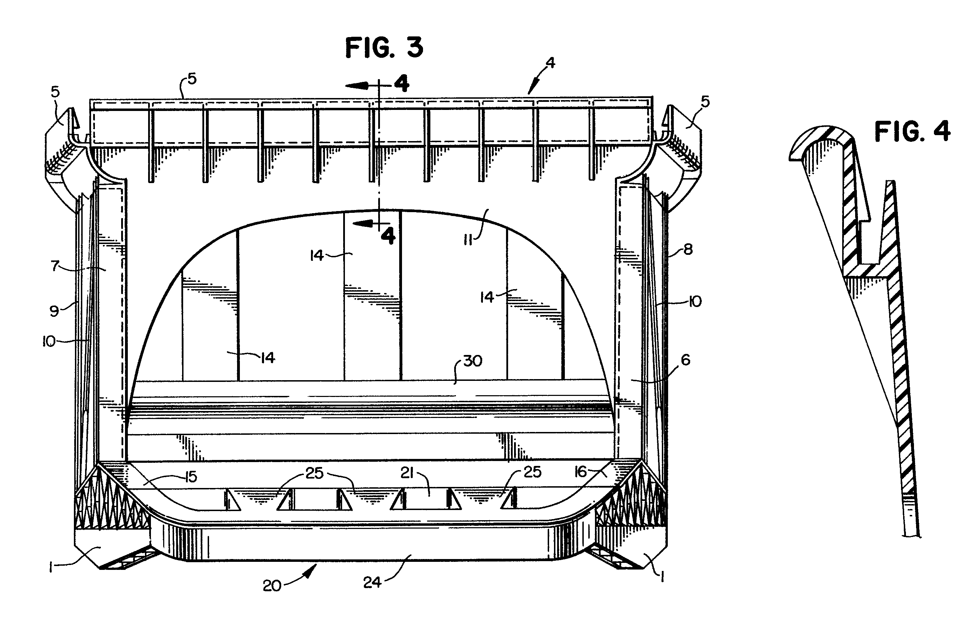

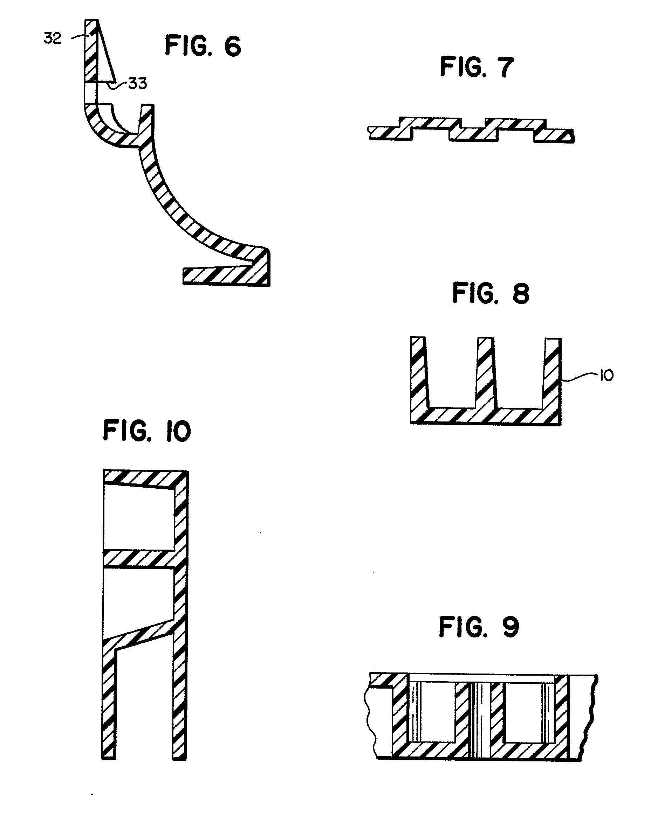

Basket support 4 includes front side struts 6 and 7 and rear side struts 8 and 9 (Fig. 3). Basket support 4 also includes diagonally located brace 10 which provides additional support and is located between each pair of front and rear struts. As shown in Fig. 8, brace 10 is ribbed for high strength. As shown in Fig. 1, front struts 6, 7 and rear struts 8, 9 are shaped and positioned to have an opposed convex curvature which further strengthens base suppport 4.

Front transverse arched web 11 (Fig. 3) is positioned intermediate front side struts 6, 7 and rear arched web 12 with upstanding members 14 is positioned between rear side struts 8, 9. These elements are provided to further strengthen base support 4.

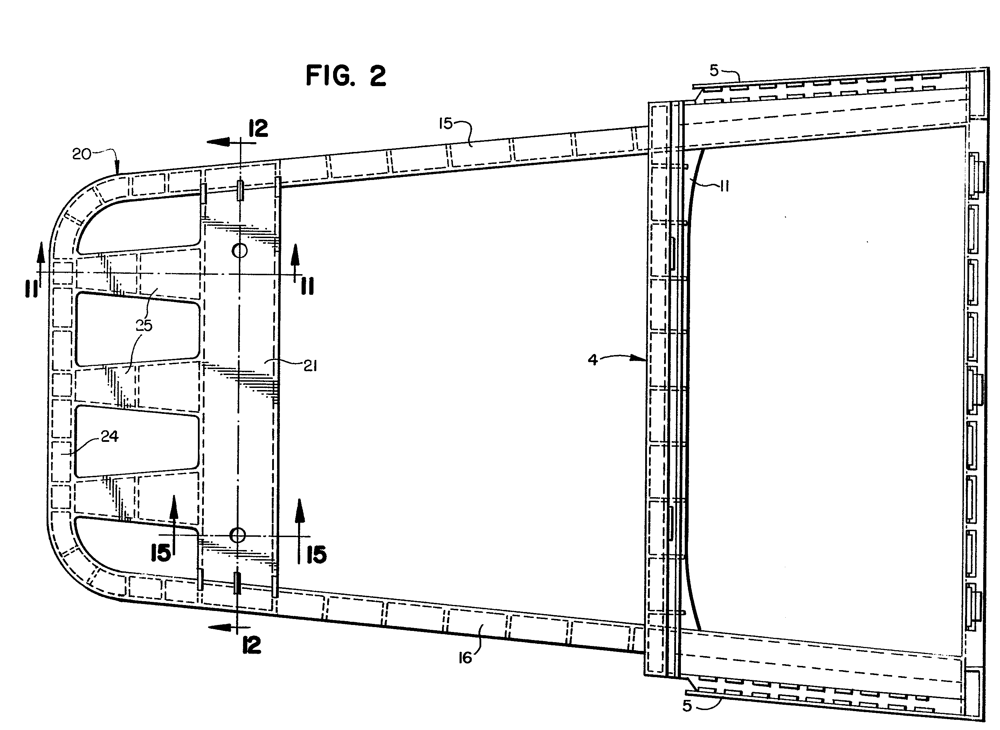

As shown in Fig. 2, base support 1, comprises parallel spaced webbed beams 15 and 16. Wheel assemblies 2 and 3 are mounted adjacent the rear and front ends of beams 15 and 16. As shown in Figure 1, rear wheel assemblies 3 are mounted so that the center of rotation of the wheels is aligned with the axis of a respective diagonal brace 10.

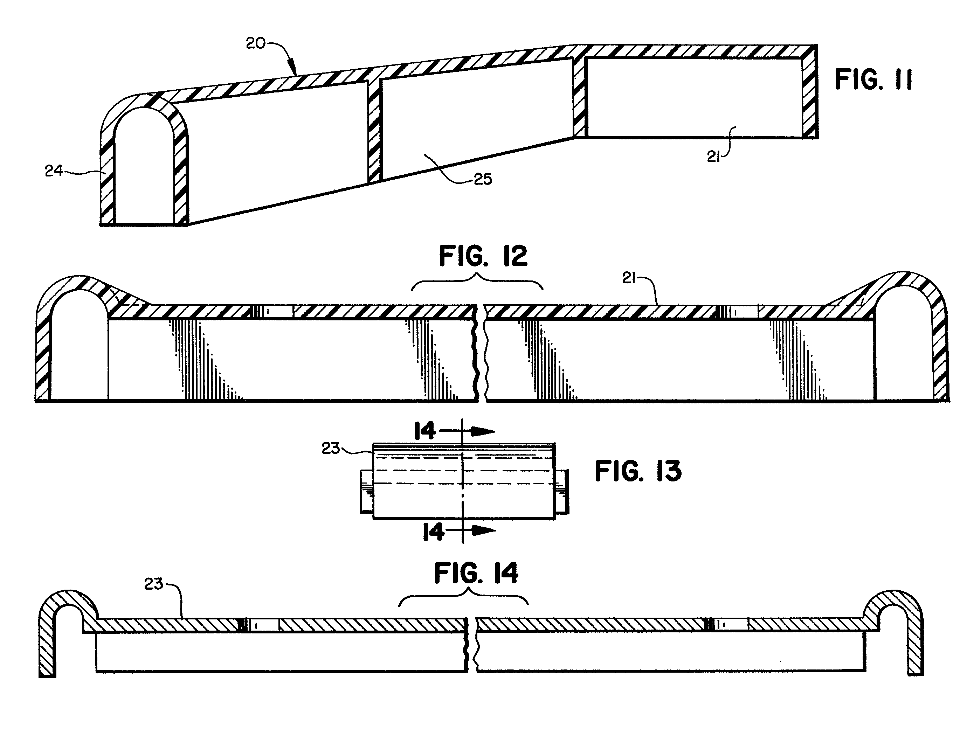

With respect to Figure 2 again, beams 15 and 16 are integrally molded with transverse front reinforcing assembly 20. Assembly 20 includes front wheel mounting member 21 shown in more detail in Figure 11-14. Wheel mounting member 21 is integrally molded to receive strengthening member 23 shown in Figure 14. Projecting from wheel mounting member 1 is nose portion 24. Nose 24 includes a plurality of longitudinal struts 25.

The rear ends of beams 15 and 16 are molded with rear transverse reinforcing member 30 and have a channel shaped configuration. A plurality of upstanding rear struts 14 are connected between reinforcing member 30 and upwardly facing mounting portion 5.

As shown in Figure 2, mounting portion 4 is substantially rectangular in shape and includes a plurality of coupling features for quickly coupling a basket, such as described in Applicant's U.S. Patent Application mentioned above. Each element comprises a male locking tang 32 as shown in Figure 6 for example which is received in a corresponding window in the basket. Locking tang 32 includes locking surface 33 which is received by a corresponding locking surface of the locking feature on the basket. A plurality of such coupling features are located along mounting portion 4 to provide the requisite coupling strength.

Obviously, many modifications and variations of the above described preferred embodiment will become apparent to those skilled in the art from a reading of this disclosure. It should be realized that the invention is not limited to the particular apparatus disclosed, but its scope is intended to be governed only by the scope of the appended claims.

## CLAIMS

1. A plastic wheeled cart frame for use with a bottom-supported plastic basket having a downwardly facing basket mounting portion, said frame comprising:

a molded longitudinally extending base;

front and rear wheels supporting said base;

an upstanding molded plastic basket support connected to said base, said support having an upwardly facing frame mounting portion adapted to mate with said basket mounting portion; and

coupling means for quickly, releasably coupling said basket to said frame.

2. The cart frame of claim 1 wherein said base and said basket support are integrally molded.

3. The cart frame of claim 1 wherein said baskit support comprises front and rear upstanding side struts on each side with a diagonally located brace connected between said front and rear struts.

4. The car frame of claim 3 wherein said struts have an opposed convex curvature.

5. The cart frame of claim 3 further comprising a transverse arched web positioned intermediate said front upstanding side struts.

6. The cart frame of claim 1 wherein said longitudinally extending base comprises parallel spaced webbed side beams, said wheels being mounted adjacent the rear and front ends of said beams.

7. The cart frame of claim 6 wherein each of said rear wheels are mounted so that the center of rotation of said rear wheels is aligned with the axis of a respective said diagonal brace.

8. The cart frame of claim 6 wherein the front ends of said beams are integrally molded with a transverse front reinforcing assembly.

9. The cart frame of claim 8 wherein said assembly includes a transverse front wheel mounting member.

10. The cart frame of claim 9 wherein said assembly further comprises a forwardly projecting cantilever nose portion and a plurality of longitudinal struts extending from said nose portion to said front wheel mounting member.

11. The cart frame of claim 6 wherein the rear ends of said beams are integrally molded with a rear transverse reinforcing member.

12. The cart frame of claim 11 wherein said rear transverse reinforcing member has a channel shaped configuration.

13. The cart frame of claim 11 further comprising a plurality of upstanding rear struts connected between said rear transverse reinforcing member and said upward facing frame mounting portion.

14. The cart frame of claim 5 wherein said upwardly facing frame mounting portion has a substantial rectangular plan and comprises two opposed front and rear transverse members, the front member being integrally molded to said transverse arched web, and the rear member being integrally molded to said upstanding rear struts and said upstanding side struts.

15. The cart frame of claim 14 wherein said frame mounting portion further comprises two opposed longitudinal side members integrally molded to said front and rear upstanding side struts and an upper end of said diagonal brace.

16. The cart frame of claim 15 wherein said front and rear transverse members and said longitudinal side members all comprise said means for coupling said basket to said frame.

17. The cart frame of claim 9 wherein said front wheel mounting member comprises reinforcing means for reinforcing said front wheel mounting member.

18. The cart frame of claim 17 wherein said reinforcing means extends from one of said webbed side beams to the other said side beam.

19. The cart frame of claim 6 wherein each of said webbed side beams comprises reinforcing means for reinforcing said side beams.

20. The cart frame of claim 19 wherein a metal tube extends along a portion of each said webbed side beam and is mounted thereto.

21. A plastic wheeled base for use as a basket support, said base comprising:

a molded plastic reinforced longitudinally extending base;

front and rear wheels supporting said base;

an upstanding molded plastic basket support connected to said base, said support having an upwardly facing frame mounting portion adapted to mate with said basket mounting portion; and

coupling means for quickly, releasably coupling said basket to said frame.

22. The base of claim 21 wherein said longitudinally extending base comprises parallel spaced webbed side beams, said wheels being mounted adjacent the rear and front ends of said beams.

23. The base of claim 22 wherein the front ends of said beams are integrally molded with a transverse front reinforcing assembly.

24. The base of claim 23 wherein said assembly includes a transverse front wheel mounting member.

25. The base of claim 24 wherein said assembly further comprises a forwardly projecting cantiliver nose portion and a plurality of longitudinal struts extending from said nose portion to said front wheel mounting member.

26. The base of claim 25 wherein said front wheel mounting member comprises reinforcing means for reinforcing said front wheel mounting member.

27. The base of claim 26 wherein said reinforcing means interconnects said side beams to prevent said side beams from parting from said front wheel mounting member.

28. The base of claim 22 wherein said reinforcing means extends from one of said webbed side beams to the other said side beam.

0161890

-12-

29. The base of claim 22 wherein each of said beams comprises reinforcing means for reinforcing said side beams.

30. The base of claim 22 wherein a metal tube extends along a portion of each said webbed side beam and is mounted thereto.

31. The cart frame of claim 1 wherein said coupling means comprises mating male and female locking elements respectively located on said basket and said frame.

32. The cart frame of claim 31 wherein said locking elements comprises mating male and female elements respectively located on said basket and said frame.

33. The cart frame of claim 32 wherein said coupling means comprises mating male and female locking elements respectively located along at least a portion of a perimeter of said mounting portions.

34. The cart frame of claim 1 wherein said basket comprises a pair of opposed side panels and a front panel, said basket comprising a pair of spaced, parallel shoulders extending along said side panels and said front panel adjacent their top edge to define a channel for receiving a reinforcing means for reinforcing said basket.

35. The cart frame of claim 34 further comprising a plurality of openings in one of said shoulders to receive locking tabs carried by said reinforcing means.

36. A plastic wheeled cart frame for use with a bottom-supported plastic basket having a downwardly facing basket mounting portion, said frame comprising a molded longitudinally extending base, front and rear wheels supporting said base, an upstanding molded plastic basket support connected to said base, said support having an upwardly facing frame mounting portion adapted to mate with said basket mounting portion and fastening means fastening said basket to said frame.

37. A plastic wheeled base for use as a basket support, said base comprising a molded plastic reinforced longitudinally extending base, front and rear wheels supporting said base, an upstanding molded plastic basket support connected to said base, said support having an upwardly facing frame mounting portion

0161890

-13-

adapted to mate with said basket mounting portion and fastening means for fastening said basket to said frame.

# FIG. 1

0161890

# FIG. 2

FIG. 3

FIG. 4

**FIG. 5**

**FIG. 16**

**FIG. 17**

0161890

FIG. 6

32

33

FIG. 7

FIG. 8

10

FIG. 10

FIG. 9

FIG. 11

FIG. 12

FIG. 13

FIG. 14

FIG. 24

FIG. 25

FIG. 15

FIG. 18

FIG.19

20

4    5

6

20

8

FIG. 20

FIG. 21

FIG. 23

FIG. 22